# EUROPÄISCHE PATENTANMELDUNG

(11) **EP 2 846 059 A1**
(43) Veröffentlichungstag der Anmeldung: **11.03.2015**
(21) Anmeldenummer: 14179792.8
(22) Anmeldetag: 05.08.2014
(51) Int. Cl.: F16D 23/12, F16D 48/02

(54) **Betätigungseinrichtung für eine Reibungskupplung und Antriebsstrang eines Kraftfahrzeugs**

(30) Priorität: 04.09.2013 DE 102013217673
(71) Anmelder: Schaeffler Technologies AG & Co. KG, 91074 Herzogenaurach (DE)
(72) Erfinder: Herkommer, Dominik, 69198 Schriesheim (DE); Baehr, Markus, 77815 Bühl (DE); Grethel, Marco, 77830 Bühlertal (DE)

(57) **Zusammenfassung**

Betätigungseinrichtung für eine Reibungskupplung, insbesondere für einen Antriebsstrang eines Kraftfahrzeugs, die Reibungskupplung aufweisend eine Drehachse, wenigstens eine Druckplatte, wenigstens eine zu einer Betätigung zwischen einer Schließposition und einer Öffnungsposition relativ zu der wenigstens einen Druckplatte axial verlagerbare Anpressplatte und eine Federeinrichtung zur Beaufschlagung der wenigstens einen Anpressplatte in Schließrichtung, wobei die Betätigungseinrichtung sowohl ein mit der Reibungskupplung kinematisch verbundenes Kupplungspedal zur fahrerseitigen Betätigung der Reibungskupplung als auch einen Aktuator zur automatisierten Betätigung der Reibungskupplung aufweist und Antriebsstrang eines Kraftfahrzeugs, der Antriebsstrang aufweisend eine Brennkraftmaschine, wenigstens eine Reibungskupplung mit einer derartigen Betätigungseinrichtung, eine elektrische Maschine, ein Getriebe und wenigstens ein antreibbares Fahrzeugrad, wobei das wenigstens eine antreibbare Fahrzeugrad mithilfe der Brennkraftmaschine und/oder mithilfe der elektrischen Maschine antreibbar ist.

## Beschreibung

Die Erfindung betrifft eine Betätigungseinrichtung für eine Reibungskupplung, insbesondere für einen Antriebsstrang eines Kraftfahrzeugs, die Reibungskupplung aufweisend eine Drehachse, wenigstens eine Druckplatte, wenigstens eine zu einer Betätigung zwischen einer Schließposition und einer Öffnungsposition relativ zu der wenigstens einen Druckplatte axial verlagerbare Anpressplatte und eine Federeinrichtung zur Beaufschlagung der wenigstens einen Anpressplatte in Schließrichtung. Außerdem betrifft die Erfindung einen Antriebsstrang eines Kraftfahrzeugs, der Antriebsstrang aufweisend eine Brennkraftmaschine, wenigstens eine Reibungskupplung mit einer derartigen Betätigungseinrichtung, eine elektrische Maschine, ein Getriebe und wenigstens ein antreibbares Fahrzeugrad.

Aus der DE 10 2005 036 897 A1 ist ein Verfahren bekannt zur Kupplungsbetätigung bei Schaltvorgängen in Fahrzeugen mit einem Clutch-by-wire-System, mit den Schritten: Ausführen einer Schaltabsichtserkennung und falls eine Schaltabsicht eines Fahrers erkannt wird, Reduzieren des Kupplungsmomentes, wobei die Reduzierung des Kupplungsmomentes von einer aktuellen Kupplungspedalposition entkoppelbar ist.

Aus der DE 10 2010 034 422 A1 ist ein Verfahren bekannt zur Steuerung einer Ausrückvorrichtung zur Betätigung einer Kupplung im Antriebsstrang eines Kraftfahrzeuges zwischen Antriebsmotor und Schaltgetriebe, umfassend einen Aktor zur Betätigung der Kupplung, einen Kupplungspedal-Stellungsgeber welcher die Stellung eines manuell betätigbaren Kupplungspedals erfasst und als elektrisches Signal an ein Kupplungssteuergerät weiterleitet, welches über eine weitere elektrische Steuerleitung den Aktor ansteuert, wobei eine vorgegebenen Pedalwertkennlinie von der Steuerung, abhängig von einer Fahrsituation abgeändert wird.

Aus der DE 10 2009 009 145 A1 ist ein Kupplungssystem bekannt mit einer automatisiert betätigten Reibungskupplung, die mittels eines hydrostatischen Kupplungsausrücksystems bestehend aus einem Nehmerzylinder, einem mit diesem mittels einer Leitung verbundenen und diesen beaufschlagenden Geberzylinder, der in einem entspannten Zustand des Geberzylinders mittels eines Geberzylinderkolbens eine Verbindungsöffnung zu einem Nachlaufbehälter freischaltet, bei dem Abweichungen eines Öffnungsverhaltens der Verbindungsöffnung erfasst werden, indem Druckverläufe des Kupplungsausrücksystems in Abhängigkeit von einer Betätigungsgeschwindigkeit des Geberzylinderkolbens ermittelt werden.

Der Erfindung liegt die Aufgabe zugrunde, eine eingangs genannte Betätigungseinrichtung baulich und/oder funktional zu verbessern. Insbesondere soll eine Betätigungseinrichtung für eine Reibungskupplung für ein Kraftfahrzeug mit einer fahrerbetätigten Schaltung und einem Hybridantrieb bereitgestellt werden. Insbesondere soll eine Betätigungseinrichtung für eine Reibungskupplung bereitgestellt werden, um einen Betrieb eines Kraftfahrzeugs mit einem Clutch-by-wire-System und einem Hybridantrieb zu ermöglichen. Insbesondere soll eine Betriebssicherheit erhöht sein. Insbesondere soll eine Funktionalität erweitert sein. Insbesondere soll die Reibungskupplung jederzeit fahrerseitig öffenbar sein. Insbesondere soll ein unmittelbarer fahrerseitiger Zugriff auf die Reibungskupplung ermöglicht sein. Insbesondere soll eine kupplungspedalseitige Rückmeldung für einen Fahrer verbessert sein. Insbesondere soll die Reibungskupplung mithilfe eines Aktuators öffenbar sein. Insbesondere soll ein Fahr-und/oder Bedienkomfort erhöht sein. Insbesondere sollen Anforderungen an einen Aktuator reduziert sein. Insbesondere soll ein Aufwand reduziert sein. Außerdem soll ein Antriebsstrang eines Kraftfahrzeugs mit einer Reibungskupplung mit einer derartigen Betätigungseinrichtung bereitgestellt werden.

Die Lösung der Aufgabe erfolgt mit einer Betätigungseinrichtung für eine Reibungskupplung, insbesondere für einen Antriebsstrang eines Kraftfahrzeugs, die Reibungskupplung aufweisend eine Drehachse, wenigstens eine Druckplatte, wenigstens eine zu einer Betätigung zwischen einer Schließposition und einer Öffnungsposition relativ zu der wenigstens einen Druckplatte axial verlagerbare Anpressplatte und eine Federeinrichtung zur Beaufschlagung der wenigstens einen Anpressplatte in Schließrichtung, wobei die Betätigungseinrichtung sowohl ein mit der Reibungskupplung kinematisch verbundenes Kupplungspedal zur fahrerseitigen Betätigung der Reibungskupplung als auch einen Aktuator zur automatisierten Betätigung der Reibungskupplung aufweist.

Die Reibungskupplung kann ein Gehäuse aufweisen. Die wenigstens eine Druckplatte kann mit dem Gehäuse fest verbunden sein. Die wenigstens eine Anpressplatte kann mit dem Gehäuse drehfest und zwischen einer Schließposition und einer Öffnungsposition axial verlagerbar verbunden sein. Die Reibungskupplung kann wenigstens eine Kupplungsscheibe aufweisen. Die wenigstens eine Kupplungsscheibe kann Reibbeläge aufweisen. Die wenigstens eine Kupplungsscheibe kann zwischen der wenigstens einen Druckplatte und der wenigstens einen Anpressplatte zur reibschlüssigen Übertragung einer mechanischen Leistung einklemmbar sein. Die Reibungskupplungseinrichtung kann ein Eingangsteil aufweisen. Die Reibungskupplungseinrichtung kann wenigstens ein Ausgangsteil aufweisen. Das Eingangsteil kann das Gehäuse, die wenigstens eine Druckplatte und die wenigstens eine Anpressplatte aufweisen. Das wenigsten eine Ausgangsteil kann die wenigstens eine Kupplungsscheibe aufweisen.

Die Reibungskupplung kann eine Einfachkupplung sein. Die Reibungskupplung kann eine Doppelkupplung sein. Die Reibungskupplung kann eine trockene Kupplung. Die Reibungskupplung kann eine nasse Kupplung sein. Die Reibungskupplung kann eine Einscheibenkupplung sein. Die Reibungskupplung kann eine Mehrscheibenkupplung sein. Die Reibungskupplung kann eine selbsttätig schließende Kupplung sein. Die Reibungskupplung kann eine gedrückte Kupplung sein. Eine gedrückte Reibungskupplung kann eine Kupplung sein, die zur Betätigung in Öffnungsrichtung gedrückt ist. Die Reibungskupplung kann eine gezogene Kupplung sein. Eine gezogene Reibungskupplung kann eine Kupplung sein, die zur Betätigung in Öffnungsrichtung gezogen ist.

Die Reibungskupplung kann ausgehend von einer vollständig geöffneten Betätigungsposition, in der zwischen dem Eingangsteil und dem Ausgangsteil im Wesentlichen keine Leistungsübertragung erfolgt, bis hin zu einer vollständig geschlossenen Betätigungsposition, in der zwischen dem Eingangsteil und dem Ausgangsteil im Wesentlichen eine vollständige Leistungsübertragung erfolgt, betätigungsabhängig eine zunehmende mechanische Leistungsübertragung ermöglichen, wobei eine Leistungsübertragung zwischen dem Eingangsteil und dem Ausgangsteil reibschlüssig erfolgt. Umgekehrt kann ausgehend von einer vollständig geschlossenen Betätigungsposition, in der zwischen dem Eingangsteil und dem Ausgangsteil im Wesentlichen eine vollständige Leistungsübertragung erfolgt, bis hin zu einer vollständig geöffneten Betätigungsposition, in der zwischen dem Eingangsteil und dem Ausgangsteil im Wesentlichen keine Leistungsübertragung erfolgt, betätigungsabhängig eine abnehmende mechanische Leistungsübertragung ermöglicht sein.

Die Federeinrichtung kann wenigstens eine Tellerfeder aufweisen. Die Federeinrichtung kann wenigstens eine Blattfeder aufweisen. Die Betätigungseinrichtung kann wenigstens ein Ausrücklager aufweisen. Der Aktuator kann ein elektromechanischer Aktuator sein. Der Aktuator kann einen Elektromotor aufweisen. Der Aktuator kann ein Getriebe aufweisen. Der Aktuator kann eine Pumpe aufweisen. Die Betätigungseinrichtung kann eine elektrische Steuereinrichtung zum Kontrollieren des Aktuators aufweisen. Die Steuereinrichtung kann eine Recheneinrichtung aufweisen. Die Steuereinrichtung kann eine Speichereinrichtung aufweisen. Die Steuereinrichtung kann wenigstens einen Signaleingang aufweisen. Die Steuereinrichtung kann wenigstens einen Signalausgang aufweisen. Mithilfe der Steuereinrichtung kann der Aktuator unter Berücksichtigung von Eingangssignalen und/oder unter Berücksichtigung von in der Speichereinrichtung hinterlegten Parametern kontrollierbar sein.

Eine kinematische Verbindung des Kupplungspedals mit der Reibungskupplung kann eine hydraulische Strecke aufweisen. Eine kinematische Verbindung des Kupplungspedals mit der Reibungskupplung kann feste Übertragungsmittel aufweisen. Die festen Übertragungsmittel können miteinander gelenkig verbunden sein. Eine fahrerseitige Betätigung kann eine durch eine Aktion eines Fahrers bedingte Betätigung sein. Eine fahrerseitige Betätigung kann eine Betätigung ohne Hilfskraftunterstützung sein. Eine fahrerseitige Betätigung kann eine Betätigung mit Hilfskraftunterstützung sein. Eine automatisierte Betätigung kann eine Betätigung durch planmäßiges Kontrollieren des Aktuators mithilfe der Steuereinrichtung sein. Die Reibungskupplung alternativ oder gleichzeitig mithilfe des Kupplungspedals und/oder des Aktuators betätigbar sein.

Die Betätigungseinrichtung kann zur hydraulischen Betätigung der Reibungskupplung einen kupplungspedalseitigen Geberzylinder, einen aktuatorseitigen Geberzylinder und einen reibungskupplungsseitigen Nehmerzylinder aufweisen. Die Geberzylinder können jeweils einen Geberkolben aufweisen. Der Nehmerzylinder kann einen Nehmerkolben aufweisen. Zwischen den kupplungspedalseitigen Geberzylinder und dem Nehmerzylinder kann eine erste hydraulische Strecke gebildet sein. Zwischen den aktuatorseitigen Geberzylinder und dem Nehmerzylinder kann eine zweite hydraulische Strecke gebildet sein. Die erste hydraulische Strecke und die zweite hydraulische Strecke können an eine T-Kreuzung zusammengeführt sein.

Die Betätigungseinrichtung kann zur hydraulischen Betätigung der Reibungskupplung einen kupplungspedalseitigen Geberzylinder und einen reibungskupplungsseitigen Nehmerzylinder aufweisen. Der Geberzylinder kann einen Geberkolben aufweisen. Der Nehmerzylinder kann einen Nehmerkolben aufweisen. Zwischen dem kupplungspedalseitigen Geberzylinder und dem reibungskupplungsseitigen Nehmerzylinder kann eine hydraulische Strecke gebildet sein.

Die Betätigungseinrichtung kann ein Ausgleichsvolumen aufweisen. Das Ausgleichsvolumen kann mit einer hydraulischen Strecke verbindbar sein, um einen Druckausgleich zu ermöglichen. Dieser Druckausgleich kann auch als "Schnüffeln" bezeichnet werden. Ein Geberzylinder kann eine Öffnung zum Verbinden einer hydraulischen Strecke mit dem Ausgleichsvolumen aufweisen. Die Öffnung kann öffenbar und/oder schließbar sein. Die Öffnung kann öffenbar sein, wenn die hydraulische Strecke druckentlastet ist. Die Öffnung kann mithilfe eines Geberkolbens öffenbar und/oder schließbar sein. Eine Öffnungsposition eines Geberkolbens kann mit der Schließposition der Reibungskupplung korrespondieren. Die Öffnung kann mithilfe eines Schaltventils unabhängig von einer Position eines Geberkolbens öffenbar und/oder schließbar sein. Das Schaltventil kann mithilfe des Aktuators betätigbar sein. Das Schaltventil kann in einer unbetätigten Vorzugsstellung geöffnet sein. Der Aktuator kann bei einer Betätigung das Schaltventil schließen. Damit bleibt bei einem Defekt des Aktuators eine Funktionalität eines klassischen Handschaltsystems erhalten.

Die Betätigungseinrichtung kann ein Zweidruckventil mit einem ersten Steueranschluss, einem zweiten Steueranschluss und einem Tankanschluss aufweisen. Der erste Steueranschluss kann mit dem kupplungspedalseitigen Geberzylinder, der zweite Steueranschluss kann mit dem aktuatorseitigen Geberzylinder und der Tankanschluss kann mit dem Ausgleichsvolumen verbunden sein. Das Zweidruckventil kann eine technische Umsetzung einer UND-Verknüpfung darstellen. Das Zweidruckventil kann ein Gehäuse aufweisen. Das Zweidruckventil kann einen hantelförmigen Schaltkolben aufweisen. Das Zweidruckventil kann eine Verbindung zwischen den Geberzylindern und dem Ausgleichsvolumen öffnen, wenn an dem ersten Steueranschluss und an dem zweiten Steueranschluss ein Drucksignal anliegt. Wenn nur an einem der beiden Steueranschlüsse ein Drucksignal anliegt, kann das Zweidruckventil eine Verbindung zu dem Ausgleichsvolumen schließen.

Die Betätigungseinrichtung kann ein 3/2-Wegeventil mit einem ersten Arbeitsanschluss, einem zweiten Arbeitsanschluss und einem Tankanschluss aufweisen. Der erste Arbeitsanschluss kann mit dem kupplungspedalseitigen Geberzylinder, der zweite Arbeitsanschluss kann mit dem aktuatorseitigen Geberzylinder und der Tankanschluss kann mit dem Ausgleichsvolumen verbunden sein. In einer ersten Schaltstellung kann das 3/2-Wegeventil eine Verbindung zwischen dem kupplungspedalseitigen Geberzylinder und dem Ausgleichsvolumen sperren und eine Verbindung zwischen dem aktuatorseitigen Geberzylinder und dem Ausgleichsvolumen öffnen. In einer zweiten Schaltstellung kann das 3/2-Wegeventil eine Verbindung zwischen dem kupplungspedalseitigen Geberzylinder und dem Ausgleichsvolumen öffnen und eine Verbindung zwischen dem aktuatorseitigen Geberzylinder und dem Ausgleichsvolumen sperren. Das 3/2-Wegeventil kann aktiv betätigbar sein. Das 3/2-Wegeventil kann mithilfe der Steuereinrichtung zum Kontrollieren des Aktuators betätigbar sein.

Die Betätigungseinrichtung kann ein 2/2-Wegeventil mit einem Arbeitsanschluss und einem Tankanschluss aufweisen. Der Arbeitsanschluss kann mit dem kupplungspedalseitigen Geberzylinder und der Tankanschluss kann mit dem Ausgleichsvolumen verbunden sein. In einer ersten Schaltstellung kann das 2/2-Wegeventil eine Verbindung zwischen dem kupplungspedalseitigen Geberzylinder und dem Ausgleichsvolumen sperren. In einer zweiten Schaltstellung kann das 2/2-Wegeventil eine Verbindung zwischen dem kupplungspedalseitigen Geberzylinder und dem Ausgleichsvolumen öffnen. Das 2/2-Wegeventil kann aktiv betätigbar sein. Das 2/2-Wegeventil kann mithilfe der Steuereinrichtung zum Kontrollieren des Aktuators betätigbar sein.

Der Aktuator kann kinematisch mit dem kupplungspedalseitigen Geberzylinder verbunden sein. Der Aktuator kann kinematisch mit dem Kupplungspedal verbunden sein. Zur mechanischen Betätigung der Reibungskupplung kann das Kupplungspedal mithilfe fester Übertragungsmittel mit der Reibungskupplung verbunden sein. Der Aktuator kann kinematisch mit einem Übertragungsmittel verbunden sein. Der Aktuator kann kinematisch mit einem Seilzug verbunden sein. Der Aktuator kann kinematisch mit einem Betätigungshebel verbunden sein.

Außerdem erfolgt die Lösung der der Erfindung zugrundeliegenden Aufgabe mit einem Antriebsstrang eines Kraftfahrzeugs, der Antriebsstrang aufweisend eine Brennkraftmaschine, wenigstens eine Reibungskupplung mit einer derartigen Betätigungseinrichtung, eine elektrische Maschine, ein Getriebe und wenigstens ein antreibbares Fahrzeugrad, wobei das wenigstens eine antreibbare Fahrzeugrad mithilfe der Brennkraftmaschine und/oder mithilfe der elektrischen Maschine antreibbar ist.

Der Kraftfahrzeugantriebsstrang kann ein Hybrid-Antriebsstrang sein. Der Kraftfahrzeugantriebsstrang kann ein Parallelhybrid-Antriebsstrang sein. Der Kraftfahrzeugantriebsstrang kann ein Vollhybrid-Antriebsstrang sein. Der Kraftfahrzeugantriebsstrang kann einen ersten Energiewandler und einen zweiten Energiewandler aufweisen. Der erste Energiewandler kann zur Wandlung chemischer Energie in kinetische Energie dienen. Die Brennkraftantriebsmaschine kann der erste Energiewandler sein. Die Brennkraftantriebsmaschine kann mit einem Kohlenwasserstoff, wie Benzin, Diesel, Flüssiggas (Liquefied Petroleum Gas, LPG, GPL), verdichtetem Erdgas (Compressed Natural Gas, CNG) oder flüssigem Erdgas (Liquefied Natural Gas, LNG) betreibbar sein. Die Brennkraftantriebsmaschine kann mit Wasserstoff betreibbar sein. Zur Energieversorgung des ersten Energiewandlers kann ein erster Energiespeicher vorgesehen sein. Der erste Energiespeicher kann ein Kraftstofftank sein. Der erste Energiespeicher kann ein Fluidtank sein. Der zweite Energiewandler kann zur Wandlung elektrischer Energie in kinetische Energie dienen. Die elektrische Maschine kann der zweite Energieumwandler sein. Die elektrische Maschine kann als Motor betreibbar sein. Die elektrische Maschine kann als Generator betreibbar sein. Die elektrische Maschine kann einen Motor und einen Generator baulich vereinigen. Zur Energieversorgung des zweiten Energiewandlers kann ein zweiter Energiespeicher vorgesehen sein. Der zweite Energiespeicher kann ein elektrischer Energiespeicher sein. Der zweite Energiespeicher kann ein Akkumulator sein. Der erste Energiewandler und/oder der zweite Energiewandler können zum wahlweisen oder parallelen Antrieb des Kraftfahrzeugs dienen. Das Getriebe kann ein Stufenschaltgetriebe sein. Die elektrische Maschine kann mithilfe eine Kupplung von dem Antriebsstrang trennbar sein, um eine träge Masse zu verringern.

Der Antriebsstrang kann unter Anwendung eines Verfahrens betrieben werden, bei dem ein kupplungspedalseitiger Wert und ein aktuatorseitiger Wert addiert werden oder ein jeweils größerer Wert vorrangig gilt. Die Werte können Wegwerte sein. Die Werte können Positionswerte sein. Die Werte können jeweils eine Kupplungsmomentanforderung repräsentieren. Eine jeweils geringere Kupplungsmomentanforderung kann Vorrang haben.

Der kupplungspedalseitige Geberzylinder kann eine Öffnung zum Verbinden der ersten hydraulischen Strecke mit dem Ausgleichsvolumen aufweisen. Der Aktuator kann mit einem Ventil diese Öffnung bei Bedarf aktiv schließen. Wenn der Aktuator ausfällt, ist so gewährleistet, dass das Kupplungspedal weiterhin normal funktioniert. Ein Druckausgleich kann über eine hydraulische UND-Schaltung getriggert werden, die nur öffnet, wenn sowohl das Kupplungspedal als auch der Aktuator in Schnüffelstellung sind. Ein Schnüffeln kann über ein Signal vom Aktuator über das Kupplungspedal oder vom Aktuator aus geschehen.

In einem verbrennungsmotorischen Fahrbetrieb kann die Reibungskupplung mithilfe des Kupplungspedals fahrerseitig kontrolliert werden. In einem verbrennungsmotorischen Fahrbetrieb kann sich der Aktuator in einem Wartezustand befinden. In einem verbrennungsmotorischen Fahrbetrieb kann die Reibungskupplung betriebssituationsabhängig vorrangig mithilfe des Aktuators kontrolliert werden. In einem verbrennungsmotorischen Fahrbetrieb kann die Reibungskupplung betriebssituationsabhängig vorrangig mithilfe des Aktuators kontrolliert werden, um ein Kupplungsmoment zu reduzieren. Während eines Anfahrvorgangs kann mithilfe des Aktuators das Kupplungsmoment reduziert werden, um ein Abwürgen der Brennkraftmaschine zu verhindern. Während eines Bremsvorgangs kann mithilfe des Aktuators das Kupplungsmoment reduziert werden, um ein Abwürgen der Brennkraftmaschine zu verhindern. Während eines Startens der Brennkraftmaschine kann mithilfe des Aktuators die Reibungskupplung geöffnet werden, um ein unbeabsichtigte Anfahren und/oder ein Abwürgen der Brennkraftmaschine zu verhindern.

In einem elektromotorischen Fahrbetrieb kann die Reibungskupplung mithilfe des Aktuators geöffnet sein und die elektrische Maschine kann unter Berücksichtigung eines Kupplungspedalbetätigungssignals, eines Lasthebelbetätigungssignals und/oder eines Bremsenbetätigungssignals kontrolliert werden. Ein Lasthebel kann ein Gaspedal sein. Während eines Wechsels von Schaltstufen des Getriebes kann die elektrische Maschine unter Berücksichtigung des Kupplungspedalbetätigungssignals derart kontrolliert werden, dass eine Zugkraftunterbrechung simuliert wird. Während eines Anfahrvorgangs kann eine Leistungsabgabe der elektrischen Maschine unter Berücksichtigung des Kupplungspedalbetätigungssignals und/oder des Lasthebelbetätigungssignals kontrolliert werden.

In einem hybriden Fahrbetrieb kann die Reibungskupplung mithilfe des Kupplungspedals fahrerseitig und/oder mithilfe des Aktuators unter Berücksichtigung einer von der elektrischen Maschine abgegebenen Leistung kontrolliert werden. Während eines Anfahrvorgangs kann mithilfe des Aktuators ein Kupplungsmoment unter Berücksichtigung einer Leistungsabgabe der elektrischen Maschine reduziert werden.

In einem Start-Stopp-Betrieb kann die Reibungskupplung mithilfe des Aktuators unter Berücksichtigung eines Kupplungspedalbetätigungssignals, eines Bremsenbetätigungssignals, einer Brennkraftmaschinendrehzahl und/oder einer Getriebeschaltstufe kontrolliert werden.

In einem Segelbetrieb kann die Reibungskupplung mithilfe des Aktuators geöffnet und die Brennkraftmaschine abgestellt werden. Beim Beenden des Segelbetriebs kann die Reibungskupplung mithilfe des Aktuators kurzzeitig geschlossen werden, um die Brennkraftmaschine zu starten.

Zusammenfassend und mit anderen Worten dargestellt ergibt sich somit durch die Erfindung unter anderem eine Kupplungsbetätigungsanordnung, insbesondere für Handschalter mit Hybridisierung. Ein Kupplungsaktor kann zu einem Pedal parallel angeordnet sein. Eine Kupplung (normally closed) kann sowohl vom Aktor, als auch vom Fahrer öffenbar sein. Konstruktionsabhängig kann eine Geberwegaddition aus Pedal und Aktor erfolgen oder es kann immer der jeweils größere Wert gelten. Ein (ungewolltes) Schließen der Kupplung alleine durch den Fahrer oder den Aktor kann verhindert sein. Eine Umsetzung kann hydraulisch oder rein mechanisch erfolgen.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Mit der Erfindung ist eine Betätigungseinrichtung für eine Reibungskupplung für ein Kraftfahrzeug mit einer fahrerbetätigten Schaltung und einem Hybridantrieb bereitgestellt. Eine Betätigungseinrichtung für eine Reibungskupplung ist bereitgestellt, sodass ein Betrieb eines Kraftfahrzeugs mit einem Clutch-by-wire-System und einem Hybridantrieb ermöglicht ist. Eine Betriebssicherheit ist erhöht. Eine Funktionalität ist erweitert. Die Reibungskupplung ist jederzeit fahrerseitig offenbar. Ein unmittelbarer fahrerseitiger Zugriff auf die Reibungskupplung ist ermöglicht. Eine kupplungspedalseitige Rückmeldung für einen Fahrer ist verbessert. Die Reibungskupplung ist mithilfe eines Aktuators offenbar. Ein Fahr- und/oder Bedienkomfort ist erhöht. Anforderungen an einen Aktuator sind reduziert. Ein Aufwand ist reduziert. Außerdem wird mit der Erfindung ein Antriebsstrang eines Kraftfahrzeugs mit einer Reibungskupplung mit einer derartigen Betätigungseinrichtung bereitgestellt.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieses Ausführungsbeispiels können auch einzelne Merkmale der Erfindung darstellen.

Es zeigen schematisch und beispielhaft:
- Fig. 1: einen Hybrid-Antriebsstrang mit einem Handschaltgetriebe und einer zwischen einer Reibungskupplung und dem Handschaltgetriebe angeordneten elektrischen Maschine,
- Fig. 2: einen Hybrid-Antriebsstrang mit einem Handschaltgetriebe und einer zwischen dem Handschaltgetriebe und einem antreibbaren Fahrzeugrad angeordneten elektrischen Maschine,
- Fig. 3: eine hydraulische Betätigungseinrichtung für eine Reibungskupplung mit einem kupplungspedalseitigen Geberzylinder und einem aktuatorseitigen Geberzylinder,
- Fig. 4: eine hydraulische Betätigungseinrichtung für eine Reibungskupplung mit einem Ausgleichsvolumen und einem Zweidruckventil,
- Fig. 5: eine hydraulische Betätigungseinrichtung für eine Reibungskupplung mit einem Ausgleichsvolumen und einem 3/2-Wegeventil,
- Fig. 6: eine hydraulische Betätigungseinrichtung für eine Reibungskupplung mit einem Ausgleichsvolumen und einem 2/2-Wegeventil,
- Fig. 7: eine hydraulische Betätigungseinrichtung für eine Reibungskupplung mit einem Geberzylinder, der mithilfe eines Kupplungspedals und/oder mithilfe eines Aktuators betätigbar ist,
- Fig. 8: eine mechanische Betätigungseinrichtung für eine Reibungskupplung mit festen Übertragungsmitteln und einem Kupplungspedal, das von einem Fahrer und/oder mithilfe eines Aktuators betätigbar ist,
- Fig. 9: eine mechanische Betätigungseinrichtung für eine Reibungskupplung mit festen Übertragungsmitteln und einem an einem Seilzug angeordneten Aktuator und
- Fig. 10: eine mechanische Betätigungseinrichtung für eine Reibungskupplung mit festen Übertragungsmitteln und einem an einem Kupplungshebel angeordneten Aktuator.

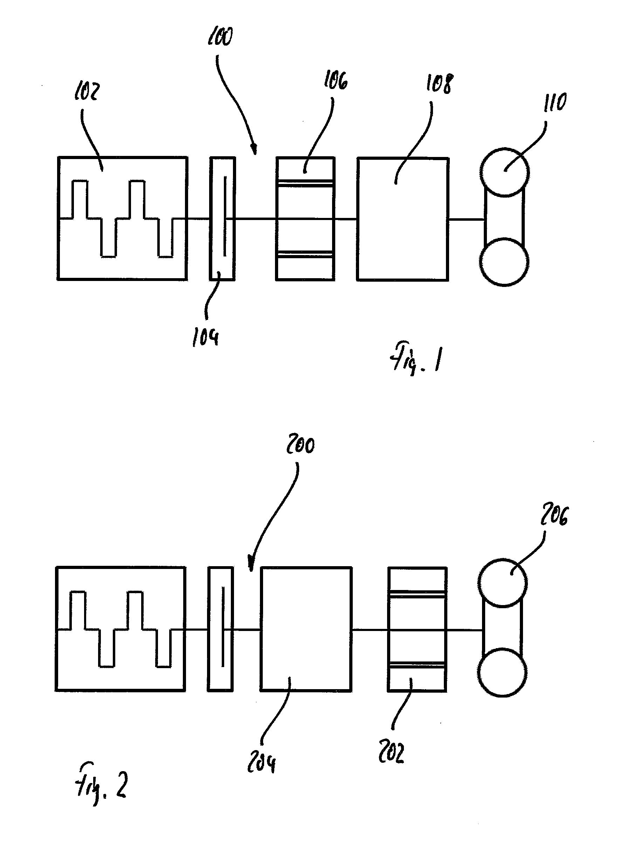

Fig. 1 zeigt einen Hybrid-Antriebsstrang 100 mit einer Brennkraftmaschine 102, einer Reibungskupplung 104, einer elektrischen Maschine 106, einem Handschaltgetriebe 108 und einem antreibbaren Fahrzeugrad 110. Die Reibungskupplung 104 ist zwischen der Brennkraftmaschine 102 und dem Handschaltgetriebe 108 angeordnet. Der Hybrid-Antriebsstrang 100 ist in einem verbrennungsmotorischen Fahrbetrieb betreibbar, in dem das Fahrzeugrad 110 ausschließlich mithilfe der Brennkraftmaschine 102 angetrieben wird. Der Hybrid-Antriebsstrang 100 ist in einem elektromotorischen Fahrbetrieb betreibbar, in dem das Fahrzeugrad 110 ausschließlich mithilfe der elektrischen Maschine 106 angetrieben wird. Der Hybrid-Antriebsstrang 100 ist in einem hybriden Fahrbetrieb betreibbar, in dem das Fahrzeugrad 110 sowohl mithilfe der Brennkraftmaschine 102 als auch mithilfe der elektrischen Maschine 106 angetrieben wird. Die elektrische Maschine 106 ist wahlweise als Motor oder als Generator betreibbar. Fig. 2 zeigt einen Hybrid-Antriebsstrang 200, bei dem die elektrische Maschine 202 zwischen dem Handschaltgetriebe 204 und dem antreibbaren Fahrzeugrad 206 angeordnet ist. Im Übrigen wird ergänzend insbesondere auf Fig. 1 und die zugehörige Beschreibung verwiesen.

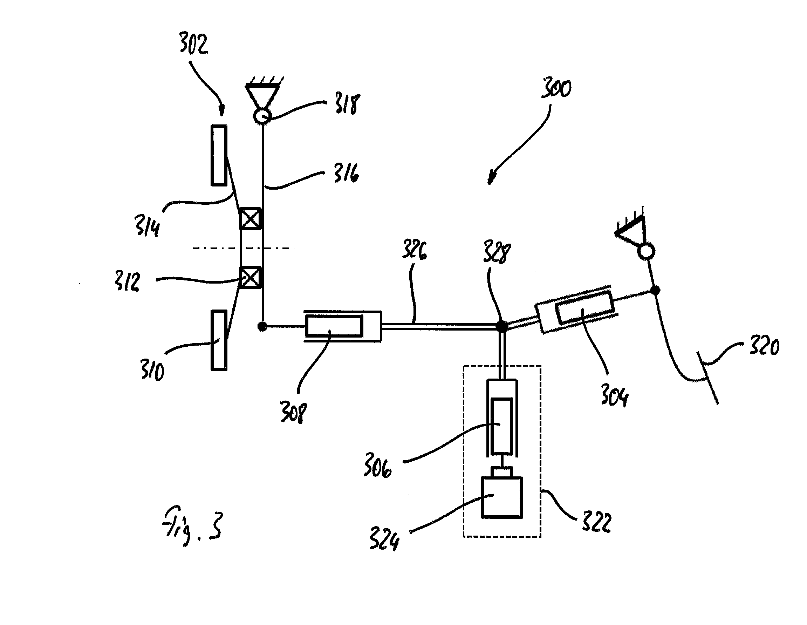

Fig. 3 zeigt eine hydraulische Betätigungseinrichtung 300 für eine Reibungskupplung 302, wie Reibungskupplung 104 gemäß Fig. 1, mit einem kupplungspedalseitigen Geberzylinder 304, einem aktuatorseitigen Geberzylinder 306 und einem reibungskupplungsseitigen Nehmerzylinder 308. In den Zylindern 304, 306, 308 ist jeweils ein Kolben axial verlagerbar geführt. Die Kolben weisen jeweils eine Kolbenstange zur mechanischen Anbindung auf. Die Geberzylinder 304, 306 weisen jeweils einen Wegsensor auf. Damit steht jeweils ein Signal über einen Geberweg zur Verfügung.

Die Reibungskupplung 302 weist eine axial zwischen einer Schließposition und einer Öffnungsposition verlagerbare Anpressplatte 310 auf. Zwischen der Reibungskupplung 302 und der Betätigungseinrichtung 300 ist ein Ausrücklager 312 angeordnet, das mechanisch, beispielsweise mithilfe eines Drucktopfes 314, mit der Anpressplatte 310 verbunden ist. Die Anpressplatte 310 ist mithilfe einer Federeinrichtung in Schließrichtung beaufschlagt. Damit ist die Reibungskupplung 302 selbsttätig schließend. Die Reibungskupplung 302 ist "normally closed". Mithilfe der Betätigungseinrichtung 300 ist die Anpressplatte 310 entgegen einer Kraft der Federeinrichtung in Öffnungsrichtung beaufschlagbar.

Die Betätigungseinrichtung 300 weist einen Hebel 316 zur Betätigung der Reibungskupplung 302 auf. Der Hebel 316 ist mithilfe eines Gelenks 318 verschwenkbar befestigt. Die Betätigungseinrichtung 300 weist ein Kupplungspedal 320 auf. Das Kupplungspedal 320 dient zur fahrerseitigen Betätigung der Reibungskupplung 302. Der kupplungspedalseitige Geberzylinder 304 ist mithilfe des Kupplungspedals 320 von einem Fahrer betätigbar. Das Kupplungspedal 320 ist mit dem kupplungspedalseitigen Geberzylinder 304 kinematisch verbunden. Die Betätigungseinrichtung 300 weist einen Aktuator 322 mit einem Motor 324 auf. Der Aktuator 322 dient zur automatisierten Betätigung der Reibungskupplung 302. Der aktuatorseitige Geberzylinder 306 ist mithilfe des Aktuators 322 automatisiert betätigbar. Der Aktuator 322 ist mit dem aktuatorseitigen Geberzylinder 306 kinematisch verbunden. Zwischen dem kupplungspedalseitigen Geberzylinder 304 und dem aktuatorseitigen Geberzylinder 306 einerseits und dem reibungskupplungsseitigen Nehmerzylinder 308 andererseits ist eine hydraulische Strecke 326 gebildet. Die hydraulische Strecke 326 weist einen Abschnitt auf, der dem kupplungspedalseitigen Geberzylinder 304 zugeordnet ist. Die hydraulische Strecke 326 weist einen Abschnitt auf, der dem aktuatorseitigen Geberzylinder 306 zugeordnet ist. Die hydraulische Strecke 326 weist einen Abschnitt auf, der dem reibungskupplungsseitigen Nehmerzylinder 308 zugeordnet ist. Diese Abschnitte der hydraulischen Strecke 326 sind in einer T-Kreuzung 328 zusammengeführt. Eine Betätigung des kupplungspedalseitigen Geberzylinders 304 und/oder des aktuatorseitigen Geberzylinders 306 bewirkt eine Betätigung des reibungskupplungsseitigen Nehmerzylinders 308. Der reibungskupplungsseitigen Nehmerzylinder 308 ist mit dem Hebel 316 kinematisch verbunden.

Die Betätigungseinrichtung 300 weist eine elektrische Steuereinrichtung zum Steuern des Aktuators 322 auf. Mithilfe der Steuereinrichtung ist ein Ausgangssignal zum Steuern des Motors 324 erzeugbar. Das Ausgangssignal wird unter Berücksichtigung von Eingangssignale und/oder von ermittelten und/oder hinterlegten Parametern erzeugt. Eingangssignale sind beispielsweise Signale von Wegsensoren der Geberzylinder 304, 306, Signale von Positionssensoren, ein Drucksignal der hydraulischen Strecke 326, ein Kupplungsbetätigungssignal, ein Lasthebelbetätigungssignal, ein Bremsenbetätigungssignal, ein Signal einer elektrischen Maschine, ein Signal über eine Schaltstufe des Handschaltgetriebes, ein Signal einer Brennkraftmaschine und/oder ein Drehzahlsignal.

Mithilfe der Betätigungseinrichtung 300 ist die Reibungskupplung 302 von einem Fahrer und/oder automatisiert betätigbar. Dabei werden Wegwerte der Geberzylinder 304, 306 addiert oder es gilt der jeweils größere Wert vorrangig. Damit ist ein unbeabsichtigtes Schließen der Reibungskupplung 302 durch einen der Geberzylinder 304, 306 alleine verhindert. Es wird immer die Forderung nach dem kleineren Kupplungsmoment umgesetzt. Um bei einer Addition der Wegwerte der Geberzylinder 304, 306 eine nehmerzylinderseitige Überlastung zu verhindern, kann die Nehmerseite der Betätigungseinrichtung 300 so ausgelegt, dass eine kombinierte Betätigung durch den kupplungspedalseitigen Geberzylinder 304 und den aktuatorseitigen Geberzylinder 306 aufgenommen werden kann. Beispielsweise weist der reibungskupplungsseitige Nehmerzylinder 308 eine verlängerte Kolbenstange auf und/oder die Reibungskupplung 302 und/oder der Hebel 316 weisen eine erhöhte Elastizität auf. Alternativ oder zusätzlich wird der Aktuator 322 entsprechend gesteuert, beispielsweise nimmt der Aktuator 322 proportional zu einer Betätigung des Kupplungspedals 320 Weg zurück. Im Übrigen wird ergänzend insbesondere auf Fig. 1-2 und die zugehörige Beschreibung verwiesen.

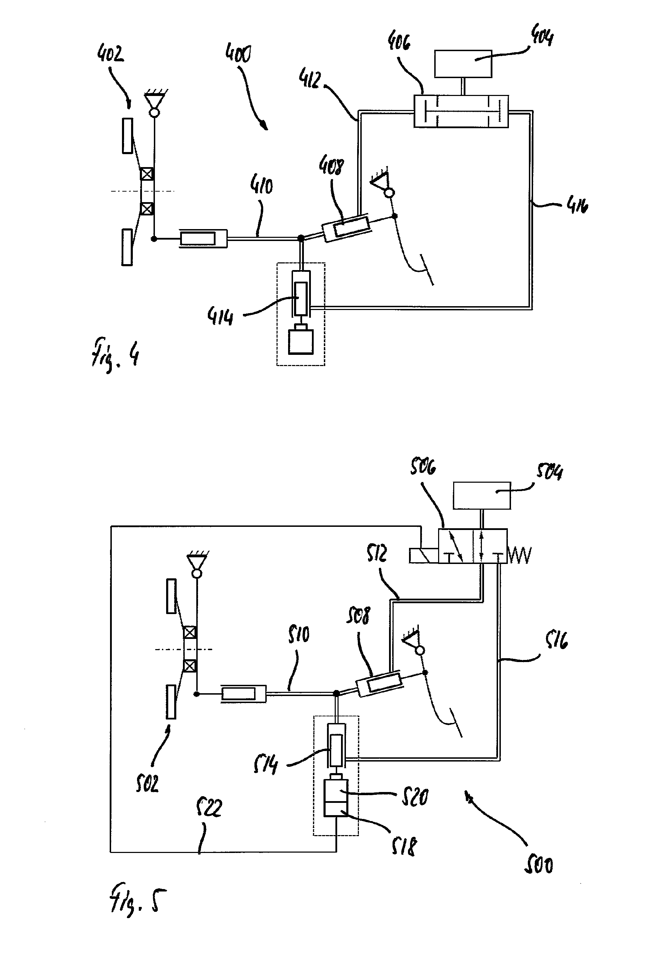

Fig. 4 zeigt eine hydraulische Betätigungseinrichtung 400 für eine Reibungskupplung 402, wie Reibungskupplung 104 gemäß Fig. 1, mit einem Ausgleichsvolumen 404 und einem Zweidruckventil 406. Das Zweidruckventil 406 weist zwei Steueranschlüsse und einen Tankanschluss auf. Der Tankanschluss ist mit dem Ausgleichsvolumen 404 verbunden. Der kupplungspedalseitige Geberzylinder 408 weist eine Öffnung zum Druckausgleich der hydraulischen Strecke 410 auf. Die Druckausgleichsöffnung des Geberzylinders 408 ist mit einer Hydraulikleitung 412 mit einem Steueranschluss des Zweidruckventils 406 verbunden. Der aktuatorseitige Geberzylinder 414 weist eine Öffnung zum Druckausgleich der hydraulischen Strecke 410 auf. Die Druckausgleichsöffnung des Geberzylinders 414 ist mit einer Hydraulikleitung 416 mit einem Steueranschluss des Zweidruckventils 406 verbunden. Die Druckausgleichsöffnungen der Geberzylinder 408, 414 können jeweils anhängig von einer Kolbenposition geöffnet oder geschlossen werden. Mit dem Zweidruckventil 406 ist sichergestellt, dass ein Druckausgleich nur bei Vorgabe durch beide Geberzylinder 408, 414 erfolgt. Im Übrigen wird ergänzend insbesondere auf Fig. 1-3 und die zugehörige Beschreibung verwiesen.

Fig. 5 zeigt eine hydraulische Betätigungseinrichtung 500 für eine Reibungskupplung 502, wie Reibungskupplung 104 gemäß Fig. 1, mit einem Ausgleichsvolumen 504 und einem 3/2-Wegeventil 506. Das 3/2-Wegeventil 506 weist zwei Arbeitsanschlüsse und einen Tankanschluss auf. Der Tankanschluss ist mit dem Ausgleichsvolumen 504 verbunden. Der kupplungspedalseitige Geberzylinder 508 weist eine Öffnung zum Druckausgleich der hydraulischen Strecke 510 auf. Die Druckausgleichsöffnung des Geberzylinders 508 ist mit einer Hydraulikleitung 512 mit einem Arbeitsanschluss des 3/2-Wegeventils 506 verbunden. Der aktuatorseitige Geberzylinder 514 weist eine Öffnung zum Druckausgleich der hydraulischen Strecke 510 auf. Die Druckausgleichsöffnung des Geberzylinders 514 ist mit einer Hydraulikleitung 516 mit einem Arbeitsanschluss des 3/2-Wegeventils 506 verbunden. Das 3/2-Wegeventil 506 ist in zwei Schaltstellungen schaltbar. In eine Schaltstellung ist die Hydraulikleitung 512 gesperrt und die Hydraulikleitung 516 mit dem Ausgleichsvolumen 504 verbunden. In der anderen Schaltstellung ist die Hydraulikleitung 512 mit dem Ausgleichsvolumen 504 verbunden und die Hydraulikleitung 516 gesperrt. Das 3/2-Wegeventil 506 ist aktiv mithilfe eines Elektromagnetaktuators schaltbar. Ein Schalten des 3/2-Wegeventils 506 erfolgt mithilfe einer Steuereinrichtung 518 des Aktuators 520. Die Steuereinrichtung 518 ist mithilfe einer Signalleitung 520 mit dem Elektromagnetaktuator verbunden. Damit kann über das 3/2-Wegeventil 506 und ein Signal der Steuereinrichtung 518 sowohl ein kupplungspedalseitiger Druckausgleich als auch ein aktuatorseitiger Druckausgleich erfolgen. Das 3/2-Wegeventil 506 wird dabei derart gesteuert, dass bei einem Ausfall des Aktuators 520 ein Druckausgleich am kupplungspedalseitigen Geberzylinder 508 erfolgt. Im Übrigen wird ergänzend insbesondere auf Fig. 1-4 und die zugehörige Beschreibung verwiesen.

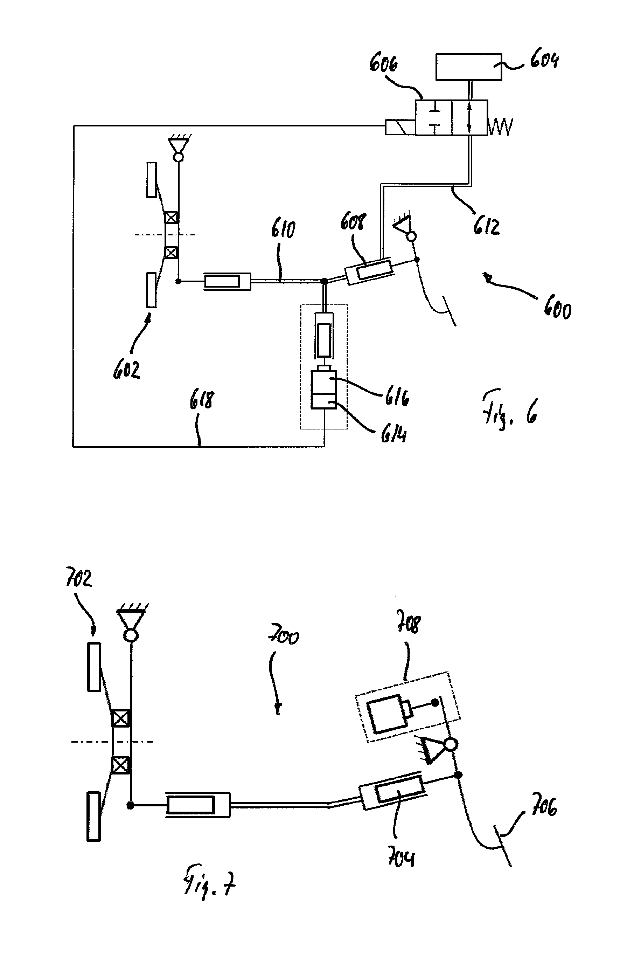

Fig. 6 zeigt eine hydraulische Betätigungseinrichtung 600 für eine Reibungskupplung 602, wie Reibungskupplung 104 gemäß Fig. 1, mit einem Ausgleichsvolumen 604 und einem 2/2-Wegeventil 606. Das 2/2-Wegeventil 606 weist einen Arbeitsanschluss und einen Tankanschluss auf. Der Tankanschluss ist mit dem Ausgleichsvolumen 604 verbunden. Der kupplungspedalseitige Geberzylinder 608 weist eine Öffnung zum Druckausgleich der hydraulischen Strecke 610 auf. Die Druckausgleichsöffnung des Geberzylinders 608 ist mit einer Hydraulikleitung 612 mit dem Arbeitsanschluss des 2/2-Wegeventils 606 verbunden. Das 2/2-Wegeventil 606 ist in zwei Schaltstellungen schaltbar. In eine Schaltstellung ist die Hydraulikleitung 612 gesperrt, in der anderen Schaltstellung ist die Hydraulikleitung 612 mit dem Ausgleichsvolumen 604 verbunden. Das 2/2-Wegeventil 606 ist aktiv mithilfe eines Elektromagnetaktuators schaltbar. Ein Schalten des 2/2-Wegeventils 606 erfolgt mithilfe einer Steuereinrichtung 614 des Aktuators 616. Die Steuereinrichtung 614 ist mithilfe einer Signalleitung 618 mit dem Elektromagnetaktuator verbunden. Mithilfe des 2/2-Wegeventils 606 kann über ein Signal der Steuereinrichtung 614 ein Druckausgleich an dem kupplungspedalseitigen Geberzylinder 608 blockiert werden. Das 2/2-Wegeventil 606 kann baulich integriert an dem kupplungspedalseitigen Geberzylinder 608 angeordnet sein. Bei einem Ausfall des Aktuators 616 bleibt das 2/2-Wegeventil 606 offen, sodass die Betätigungseinrichtung 600 einem üblichen Handschalter gleicht. Im Übrigen wird ergänzend insbesondere auf Fig. 1-5 und die zugehörige Beschreibung verwiesen.

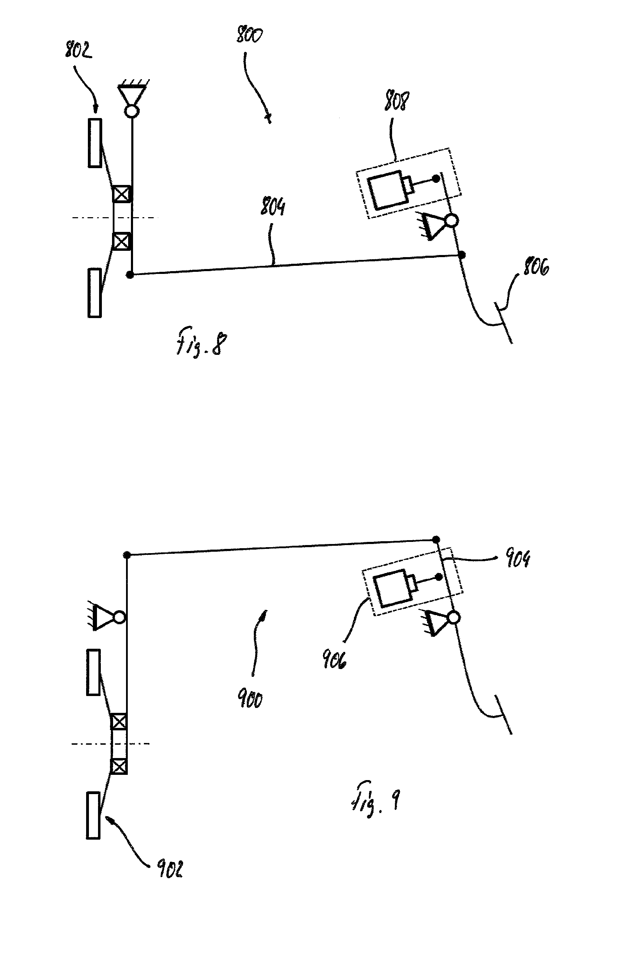

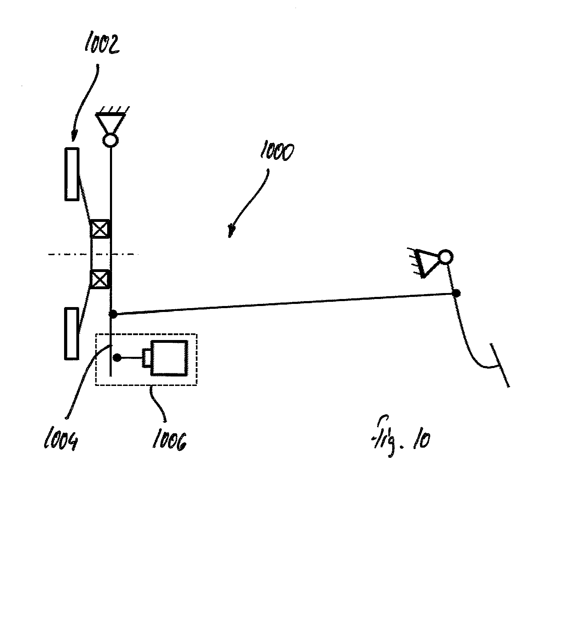

Fig. 7 zeigt eine hydraulische Betätigungseinrichtung 700 für eine Reibungskupplung 702, wie Reibungskupplung 104 gemäß Fig. 1, mit einem Geberzylinder 704, der mithilfe eines Kupplungspedals 706 und/oder mithilfe eines Aktuators 708 betätigbar ist. Der Aktuator 708 ist direkt am Kupplungspedal 706 angeordnet. Fig. 8 zeigt eine mechanische Betätigungseinrichtung 800 für eine Reibungskupplung 802, wie Reibungskupplung 104 gemäß Fig. 1, mit festen Übertragungsmitteln 804 und einem Kupplungspedal 806, das von einem Fahrer und/oder mithilfe eines Aktuators 808 betätigbar ist. Fig. 9 zeigt eine mechanische Betätigungseinrichtung 900 für eine Reibungskupplung 902, wie Reibungskupplung 104 gemäß Fig. 1, mit festen Übertragungsmitteln und einem an einem Seilzug 904 angeordneten Aktuator 906. Fig. 10 zeigt eine mechanische Betätigungseinrichtung 1000 für eine Reibungskupplung 1002, wie Reibungskupplung 104 gemäß Fig. 1, mit festen Übertragungsmitteln und einem an einem Kupplungshebel 1004 angeordneten Aktuator 1006. Bei den Betätigungseinrichtungen 700, 800, 900, 1000 hat jeweils eine kleinere Momentvorgabe von Kupplungspedal oder Aktuator Vorrang. Im Übrigen wird ergänzend insbesondere auf Fig. 1-3 und die zugehörige Beschreibung verwiesen.

### Bezugszeichenliste

- 100: Hybrid-Antriebsstrang
- 102: Brennkraftmaschine
- 104: Reibungskupplung
- 106: elektrische Maschine
- 108: Handschaltgetriebe
- 110: antreibbares Fahrzeugrad

- 200: Hybrid-Antriebsstrang
- 202: elektrische Maschine
- 204: Handschaltgetriebe
- 206: antreibbares Fahrzeugrad

- 300: hydraulische Betätigungseinrichtung
- 302: Reibungskupplung
- 304: kupplungspedalseitiger Geberzylinder
- 306: aktuatorseitiger Geberzylinder
- 308: reibungskupplungsseitiger Nehmerzylinder
- 310: Anpressplatte
- 312: Ausrücklager
- 314: Drucktopf
- 316: Hebel
- 318: Gelenk
- 320: Kupplungspedal
- 322: Aktuator
- 324: Motor
- 326: hydraulische Strecke
- 328: T-Kreuzung

- 400: hydraulische Betätigungseinrichtung
- 402: Reibungskupplung
- 404: Ausgleichsvolumen
- 406: Zweidruckventil
- 408: kupplungspedalseitiger Geberzylinder
- 410: hydraulische Strecke
- 412: Hydraulikleitung
- 414: aktuatorseitiger Geberzylinder
- 416: Hydraulikleitung

- 500: hydraulische Betätigungseinrichtung
- 502: Reibungskupplung
- 504: Ausgleichsvolumen
- 506: 3/2-Wegeventil
- 508: kupplungspedalseitiger Geberzylinder
- 510: hydraulische Strecke
- 512: Hydraulikleitung
- 514: aktuatorseitiger Geberzylinder
- 516: Hydraulikleitung
- 518: Steuereinrichtung
- 520: Aktuator
- 522: Signalleitung

- 600: hydraulische Betätigungseinrichtung
- 602: Reibungskupplung
- 604: Ausgleichsvolumen
- 606: 2/2-Wegeventil
- 608: kupplungspedalseitiger Geberzylinder
- 610: hydraulische Strecke
- 612: Hydraulikleitung
- 614: Steuereinrichtung
- 616: Aktuator
- 618: Signalleitung

- 700: hydraulische Betätigungseinrichtung
- 702: Reibungskupplung
- 704: Geberzylinder
- 706: Kupplungspedal
- 708: Aktuator

- 800: mechanische Betätigungseinrichtung
- 802: Reibungskupplung
- 804: festes Übertragungsmittel
- 806: Kupplungspedal
- 808: Aktuator

- 900: mechanische Betätigungseinrichtung
- 902: Reibungskupplung
- 904: Seilzug
- 906: Aktuator

- 1000: mechanische Betätigungseinrichtung
- 1002: Reibungskupplung
- 1004: Kupplungshebel
- 1006: Aktuator

## Patentansprüche

1. Betätigungseinrichtung (300, 400, 500, 600, 700, 800, 900, 1000) für eine Reibungskupplung (104, 302, 402, 502, 602, 702, 802, 902, 1002), insbesondere für einen Antriebsstrang (100, 200) eines Kraftfahrzeugs, die Reibungskupplung (104, 302, 402, 502, 602, 702, 802, 902, 1002) aufweisend eine Drehachse, wenigstens eine Druckplatte, wenigstens eine zu einer Betätigung zwischen einer Schließposition und einer Öffnungsposition relativ zu der wenigstens einen Druckplatte axial verlagerbare Anpressplatte (310) und eine Federeinrichtung zur Beaufschlagung der wenigstens einen Anpressplatte (310) in Schließrichtung, **dadurch gekennzeichnet, dass** die Betätigungseinrichtung (300, 400, 500, 600, 700, 800, 900, 1000) sowohl ein mit der Reibungskupplung (104, 302, 402, 502, 602, 702, 802, 902, 1002) kinematisch verbundenes Kupplungspedal (320, 706, 806) zur fahrerseitigen Betätigung der Reibungskupplung (104, 302, 402, 502, 602, 702, 802, 902, 1002) als auch einen Aktuator (322, 520, 66, 708, 808, 906, 1006) zur automatisierten Betätigung der Reibungskupplung (104, 302, 402, 502, 602, 702, 802, 902, 1002) aufweist.

2. Betätigungseinrichtung (300, 400, 500, 600) nach Anspruch 1, **dadurch gekennzeichnet, dass** die Betätigungseinrichtung (300, 400, 500, 600) zur hydraulischen Betätigung der Reibungskupplung (104, 302, 402, 502, 602) einen kupplungspedalseitigen Geberzylinder (304, 408, 508, 608), einen aktuatorseitigen Geberzylinder (306, 414, 514) und einen reibungskupplungsseitigen Nehmerzylinder (308) aufweist.

3. Betätigungseinrichtung (400) nach Anspruch 2, **dadurch gekennzeichnet, dass** die Betätigungseinrichtung (400) ein Ausgleichsvolumen (404) und ein Zweidruckventil (406) mit einem ersten Steueranschluss, einem zweiten Steueranschluss und einem Tankanschluss aufweist und der erste Steueranschluss mit dem kupplungspedalseitigen Geberzylinder (408), der zweite Steueranschluss mit dem aktuatorseitigen Geberzylinder (414) und der Tankanschluss mit dem Ausgleichsvolumen (404) verbunden ist.

4. Betätigungseinrichtung (500) nach Anspruch 2, **dadurch gekennzeichnet, dass** die Betätigungseinrichtung (500) ein Ausgleichsvolumen (504) und ein 3/2-Wegeventil (506) mit einem ersten Arbeitsanschluss, einem zweiten Arbeitsanschluss und einem Tankanschluss aufweist und der erste Arbeitsanschluss mit dem kupplungspedalseitigen Geberzylinder (508), der zweite Arbeitsanschluss mit dem aktuatorseitigen Geberzylinder (514) und der Tankanschluss mit dem Ausgleichsvolumen (504) verbunden ist.

5. Betätigungseinrichtung (600) nach Anspruch 2, **dadurch gekennzeichnet, dass** die Betätigungseinrichtung (600) ein Ausgleichsvolumen (604) und ein 2/2-Wegeventil (606) mit einem Arbeitsanschluss und einem Tankanschluss aufweist und der Arbeitsanschluss mit dem kupplungspedalseitigen Geberzylinder (608) und der Tankanschluss mit dem Ausgleichsvolumen (604) verbunden ist.

6. Betätigungseinrichtung (700) nach Anspruch 1, **dadurch gekennzeichnet, dass** die Betätigungseinrichtung (700) zur hydraulischen Betätigung der Reibungskupplung (702) einen kupplungspedalseitigen Geberzylinder (704) und einen reibungskupplungsseitigen Nehmerzylinder aufweist.

7. Betätigungseinrichtung (700) nach Anspruch 6, **dadurch gekennzeichnet, dass** der Aktuator (708) kinematisch mit dem kupplungspedalseitigen Geberzylinder (704) verbunden ist.

8. Betätigungseinrichtung (800, 900, 1000) nach Anspruch 1, **dadurch gekennzeichnet, dass** zur mechanischen Betätigung der Reibungskupplung (802, 902, 1002) das Kupplungspedal (806) mithilfe fester Übertragungsmittel (804, 904, 1004) mit der Reibungskupplung (802, 902, 1002) verbunden ist und der Aktuator (808, 906, 1006) kinematisch mit einem Übertragungsmittel (804, 904, 1004) verbunden ist.

9. Antriebsstrang (100, 200) eines Kraftfahrzeugs, der Antriebsstrang (100, 200) aufweisend eine Brennkraftmaschine (102), eine Reibungskupplung (104, 302, 402, 502, 602, 702, 802, 902, 1002) mit einer Betätigungseinrichtung (300, 400, 500, 600, 700, 800, 900, 1000) nach wenigstens einem der vorhergehenden Ansprüche, eine elektrische Maschine (106, 202), ein Getriebe (108, 204) und wenigstens ein antreibbares Fahrzeugrad (110, 206), wobei das wenigstens eine antreibbare Fahrzeugrad (110, 206) mithilfe der Brennkraftmaschine (102) und/oder mithilfe der elektrischen Maschine (106, 202) antreibbar ist.
